# EUROPEAN PATENT APPLICATION

(11) **EP 2 088 639 A1**
(43) Date of publication of application: **12.08.2009**
(21) Application number: 08250415.0
(22) Date of filing: 05.02.2008
(51) Int. Cl.: H01M 10/50, H01M 6/50

(54) **Device and method for keeping battery**

(71) Applicant: Pegatron Corporation, Taipei City 112, Taiwan (CN)
(72) Inventor: Lin, Chih-Hisung, Taipei City 112 Taiwan (CN); Wang, Jing-Rung, Taipei City 112 Taiwan (CN)
(74) Representative: Tranter, Andrew David

(57) **Abstract**

A device for keeping battery pack of portable computer at operable temperature includes a battery pack for supplying power to the portable computer; a thermal sensor installed in the battery pack for sensing a battery temperature; a heating film installed tightly close to the battery pack; and a microprocessor connected to the thermal sensor for receiving the battery temperature sensed by the thermal sensor. When detecting the battery temperature is lower than a first predetermined temperature, the microprocessor enables the battery pack to connect to and supply power to the heating film for heating the battery pack. When detecting the battery temperature is higher than a second predetermined temperature, the microprocessor enables the battery pack to disconnect from the heating film. The first predetermined temperature is lower than a minimum operable temperature and the second predetermined temperature is higher than the first predetermined temperature.

## Description

### BACKGROUND OF THE INVENTION

### 1. Field of the Invention

The present invention relates to batteries and, more particularly, to a device and method for keeping battery pack of portable computer at operable temperature.

### 2. Description of Related Art

Typically, batteries are used in a portable computer for providing power to the portable computer for operation. Due to the widespread use of portable computer, it is possible for people to use the portable computer in an extremely low temperature environment, for example, in an environment with a temperature as low as -40 degree C. However, under such an environment, the battery pack is unable to discharge as the temperature is lower than the minimum dischargeable temperature, for example -10 degree C, of the battery, and thus cannot supply power to the portable computer, resulting in failure of powering on the portable computer.

In order to power on a portable computer in an environment with extremely low temperature such as -40 degree C, an AC-DC adapter plugged in a power receptacle has to be used to supply power to and power on the portable computer, and then pre-heat the battery pack of the portable computer for subsequent operation of the portable computer. After the battery pack is heated to a temperature higher than the minimum dischargeable temperature, for example -10 degree C, the battery_pack is operable to discharge, and subsequently the portable computer can operate with power supplied by the battery pack.

Since the portable computer is characterized in its high portability, users are allowed to use portable computers in an outdoor environment that typically does not have any power receptacle and thus the battery pack in the portable computer is still the power source to supply power to the portable computer. Therefore, the aforementioned operation of portable computer is unsatisfactory as it requires plugging the AC-DC adapter into a power receptacle and thus is not applicable in an environment with no power receptacle. Accordingly, it is desired to solve the problem in that the portable computer cannot be used in an outdoor low temperature environment having no power receptacle due to the battery pack being unable to discharge in low temperature.

### SUMMARY OF THE INVENTION

The objective of the present invention is to provide a device for keeping battery pack of portable computer at operable temperature, so as to allow powering on the portable computer immediately without using an AC-DC adapter in an extremely low temperature environment.

In one aspect, there is provided a device for keeping battery pack of portable computer at operable temperature, which comprises: a battery pack for supplying power to the portable computer; a thermal sensor installed in the battery pack for sensing a battery temperature; a heating film installed tightly close to the battery pack; and a microprocessor operatively connected to the thermal sensor for receiving the battery temperature sensed by the thermal sensor, and enabling the battery pack to connect to and supply power to the heating film for heating the battery pack when the battery temperature is lower than a first predetermined temperature and enabling the battery pack to disconnect from the heating film when the battery temperature is higher than a second predetermined temperature, wherein the first predetermined temperature is lower than a minimum operable temperature and the second predetermined temperature is higher than the first predetermined temperature.

In another aspect, there is provided a method for keeping battery pack of portable computer at operable temperature, which comprises the steps of: (A) providing a battery pack for supplying power to the portable computer; (B) using a thermal sensor installed in the battery pack for sensing a battery temperature; (C) receiving the battery temperature sensed by the thermal sensor, and heating the battery pack when the battery temperature is lower than a first predetermined temperature, while stopping heating the battery pack when the battery temperature is higher than a second predetermined temperature, wherein the first predetermined temperature is lower than a minimum operable temperature and the second predetermined temperature is higher than the first predetermined temperature.

Other objects, advantages, and novel features of the invention will become more apparent from the following detailed description when taken in conjunction with the accompanying drawings.

### BRIEF DESCRIPTION OF THE DRAWINGS

FIG. 1 is a block diagram of the device for keeping battery pack of portable computer at operable temperature in accordance with the preferred embodiment of the present invention;
FIG. 2 shows the control flow of the device for keeping battery pack of portable computer at operable temperature in accordance with the preferred embodiment of the present invention; and
FIG. 3 shows the battery temperature variation with the control of the switch in accordance with the control flow of the preferred embodiment of the present invention.

### DETAILED DESCRIPTION OF THE PREFERRED EMBODIMENT

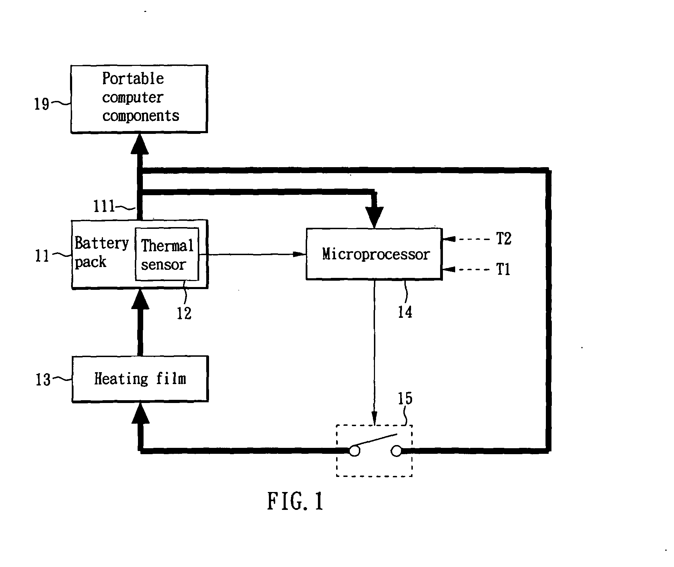

FIG. 1 is a block diagram of the device for keeping battery pack of portable computer at operable temperature in accordance with a preferred embodiment of the present invention. The device includes a battery pack 11, a thermal sensor 12, a heating film 13, a microprocessor 14, and a power switch 15. The battery pack 11 is installed in, for example, a battery chamber (not shown) of a portable computer for supplying power to the components of portable computer 19, such as power regulator, central processing unit, clock generator, south bridge chip, north bridge chip, memory chips, hard disk, LCD display, etc. The battery pack 11 has a power output terminal 111 connected to the components of portable computer 19 and the microprocessor 14, and to the heating film 13 via the switch 15 for supplying power thereto.

The thermal sensor 12 is installed in the battery pack 11 for sensing a battery temperature of the battery pack 11. The heating film 13 is installed tightly close to the battery pack 11, for example in contact with the battery pack 11, so as to heat the battery pack 13. The power switch 15 is connected between the heating film 15 and the battery pack, and is controlled by the microprocessor 14 for being turned on and off

The microprocessor 14 is operatively connected to the thermal sensor 12 for receiving the battery temperature sensed by the thermal sensor 12, so as to control the on/off operation of the power switch 15 based on the sensed battery temperature, thereby determining whether to enable the heating film 13 to heat the battery pack 11.

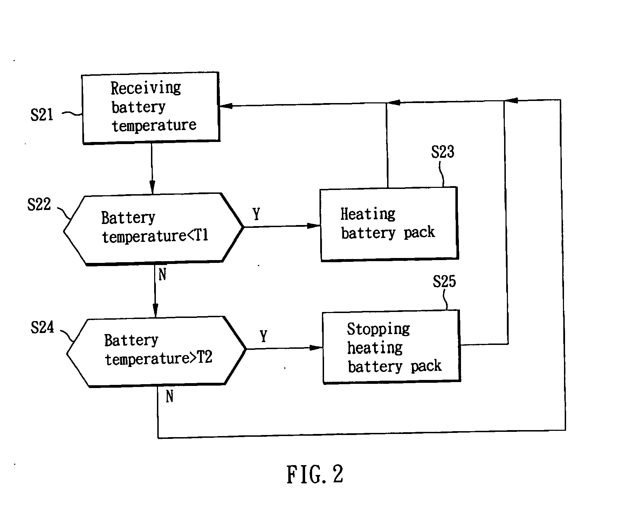

FIG. 2 shows the control flow of the microprocessor 14 configured with a first predetermined temperature T1 which is lower than a minimum operable temperature and a second predetermined temperature T2 which is higher than the first predetermined temperature. Preferably, the first predetermined temperature T1 is a minimum dischargeable temperature for the battery pack 11, i.e., an operating temperature at which the battery pack 11 has a minimum discharge capacity. The second predetermined temperature is an operating temperature at which the battery pack 11 has a higher discharge capacity, i.e., a dischargeable temperature at which the battery pack 11 has a dischargeable capacity higher than that at the minimum dischargeable temperature. Typically, the minimum dischargeable temperature for the battery pack 11 used in a portable computer is about -10 degree C, and the operating temperature at which the battery pack 11 has a higher dischargeable capacity used in a portable computer is 0 degree C.

The flow begins by receiving the battery temperature sensed by the thermal sensor 12 (step 21). When detecting the sensed battery temperature is lower than the first predetermined temperature T1 (step S22), indicating that the battery pack 11 is almost unable to discharge due to low temperature, the microprocessor 14 turns the power switch 15 on for enabling the battery pack 11 to connect to the heating film 13 and thus supply power to the heating film 13 so as to heat the battery pack 11 and accordingly increase the battery temperature of the battery pack 11 (step S23), thereby allowing the battery pack 11 to maintain in a dischargeable state. When detecting the sensed battery temperature is higher than the second predetermined temperature T2 (step S24), indicating that the battery pack 11 is able to operate at a temperature high enough, the microprocessor 14 turns the power switch 15 off for enabling the battery pack 11 to disconnect from the heating film 13 and thus stop supplying power to the heating film 13 and stop heating the battery pack 11 (step S25).

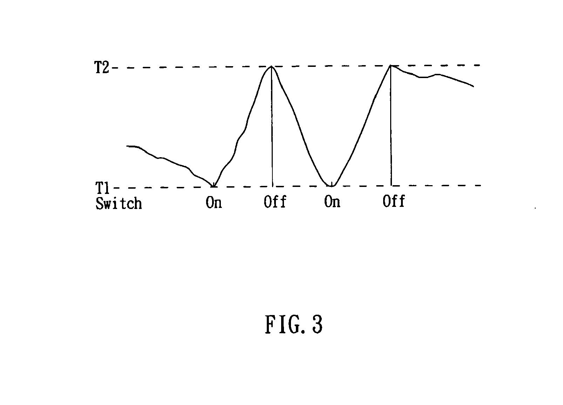

FIG. 3 shows the battery temperature variation with the control of the power switch 15 in accordance with the control flow of the microprocessor 14. As shown, when a portable computer is used in an extremely low temperature environment and the battery temperature falls below the first predetermined temperature T1, the power switch 15 is turned on to thus heat the battery pack 11 and gradually increase the battery temperature. When the battery temperature is increased to reach the second predetermined temperature T2, the power switch 15 is turned off to thus stop heating the battery pack 11, making the battery temperature gradually decrease. The above operation is repeated to alternately turn on and turn off the power switch 15 to heat and stop heating the battery pack 15 to maintain the battery pack 11 at a dischargeable state with minimum power consumption. Accordingly, the battery pack 15 of the portable computer is always kept at a dischargeable state for readily supplying power to the components of the portable computer, and thus the portable computer equipped with the battery pack 11 is able to operate in an extremely low temperature environment while the power consumed to keep the battery pack 11 at operable temperature is miniaturized.

Although the present invention has been explained in relation to its preferred embodiment, it is to be understood that many other possible modifications and variations can be made without departing from the spirit and scope of the invention as hereinafter claimed.

## Claims

1. A device for keeping battery pack of portable computer at operable temperature, comprising:
a battery pack for supplying power to the portable computer;
a thermal sensor installed in the battery pack for sensing a battery temperature;
a heating film installed tightly close to the battery pack; and
a microprocessor operatively connected to the thermal sensor for receiving the battery temperature sensed by the thermal sensor, and enabling the battery pack to connect to and supply power to the heating film for heating the battery pack when the battery temperature is lower than a first predetermined temperature and enabling the battery pack to disconnect from the heating film when the battery temperature is higher than a second predetermined temperature,
wherein the first predetermined temperature is lower than a minimum operable temperature and the second predetermined temperature is higher than the first predetermined temperature.

2. The device as claimed in claim 1, further comprising a power switch connected between the heating film and the battery pack, and controlled by the microprocessor such that the power switch is on when the microprocessor receives the battery temperature being lower than the first predetermined temperature, and the power switch is off when the microprocessor receives the battery temperature reaching the second predetermined temperature.

3. The device as claimed in claim 2, wherein the first predetermined temperature is a minimum dischargeable temperature for the battery pack.

4. The device as claimed in claim 3, wherein the first predetermined temperature is -10 degree C.

5. The device as claimed in claim 2, wherein the second predetermined temperature is an operating temperature at which the battery pack has a dischargeable capacity higher than that at the minimum dischargeable temperature.

6. The device as claimed in claim 5, wherein the second predetermined temperature is 0 degree C.

7. A method for keeping battery pack of portable computer at operable temperature, comprising the steps of:
(A) providing a battery pack for supplying power to the portable computer;
(B) using a thermal sensor installed in the battery pack for sensing a battery temperature; and
(C) receiving the battery temperature sensed by the thermal sensor, and heating the battery pack when the battery temperature is lower than a first predetermined temperature, while stopping heating the battery pack when the battery temperature is higher than a second predetermined temperature, wherein the first predetermined temperature is lower than a minimum operable temperature and the second predetermined temperature is higher than the first predetermined temperature.

8. The method as claimed in claim 7, wherein in step (C), the battery pack is heated by a heating film installed tightly close to the battery pack and powered by the battery pack.

9. The device as claimed in claim 8, wherein the first predetermined temperature is a minimum dischargeable temperature for the battery pack.

10. The device as claimed in claim 9, wherein the first predetermined temperature is -10 degree C.

11. The device as claimed in claim 8, wherein the second predetermined temperature is an operating temperature at which the battery pack has a dischargeable capacity higher than that at the minimum dischargeable temperature.

12. The device as claimed in claim 11, wherein the second predetermined temperature is 0 degree C.
